(19) Europäisches Patentamt / European Patent Office / Office européen des brevets

(11) **EP 2 427 951 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **10708543.3**

(22) Anmeldetag: **12.03.2010**

(51) Int Cl.:
*H02K 3/28* *(2006.01)*  *H02K 29/03* *(2006.01)*
*B62D 5/04* *(2006.01)*

(86) Internationale Anmeldenummer:
**PCT/EP2010/053227**

(87) Internationale Veröffentlichungsnummer:
**WO 2010/127891 (11.11.2010 Gazette 2010/45)**

(54) **ELEKTRISCHE SYNCHRONMASCHINE**

SYNCHRONOUS ELECTRIC MACHINE

MACHINE ELECTRIQUE SYNCHRONE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.05.2009 DE 102009002928**

(43) Veröffentlichungstag der Anmeldung:
**14.03.2012 Patentblatt 2012/11**

(73) Patentinhaber: **Robert Bosch GmbH**
**70442 Stuttgart (DE)**

(72) Erfinder:
- **TRAN, Quang-Ngoc**
  **70563 Stuttgart (DE)**
- **ROTH, Karl-Juergen**
  **71701 Schwieberdingen (DE)**
- **REUTLINGER, Kurt**
  **70174 Stuttgart (DE)**

(56) Entgegenhaltungen:
**WO-A1-00/60724 WO-A1-97/26699**
**WO-A1-2006/029969 WO-A1-2008/037264**
**JP-A- 10 243 621 US-A- 5 929 549**
**US-A1- 2005 242 677**

Printed by Jouve, 75001 PARIS (FR)

## Beschreibung

Technisches Gebiet

Die Erfindung betrifft eine elektrische Maschine mit 18 Statorzähnen und 14 Rotorpolen, insbesondere für den Einsatz bei elektrischen Lenkhilfen.

Stand der Technik

Bei elektrischen Antrieben für Lenksysteme mit elektromechanischer Unterstützung für den Einsatz in Kraftfahrzeugen ist es erforderlich, dass die Schwankungen des an der Welle erzeugten Antriebsmoments möglichst gering sind. Üblicherweise werden für derartige Anwendungen permanentmagneterregte elektrisch kommutierte Synchronmotoren verwendet, da diese aufgrund ihrer Leistungsdichte, ihres Wirkungsgrads und ihrer Regelmöglichkeit Vorteile aufweisen.

Bei elektronisch kommutierten Synchronmotoren entstehen jedoch durch Oberwellen so genannte Oberwellenmomente, die zu starken Schwankungen des Drehmoments führen können. Deshalb müssen solche Antriebe derart gestaltet werden, dass diese Oberwellen möglichst reduziert sind oder deren Auswirkungen auf den Drehmomentenverlauf möglichst gering sind. Weiterhin treten bei derartigen Synchronmaschinen Drehmomentenschwankungen nicht nur unter Last auf, sondern auch bei stromlosen Statorwicklungen, die als Rastmoment bezeichnet werden. Insbesondere bei kleinen Maschinen ist es aufgrund der Platzverhältnisse nicht möglich, eine fein verteilte Wicklung in den Anker einzulegen, um ein ideales sinusförmiges Luftspaltfeld zu erzeugen. Daher muss bei kleinen Maschinen mit entsprechenden Oberwellen im Luftspalt gerechnet werden. Es wäre daher vorteilhaft, die Maschinen so zu gestalten, dass diese Oberwellen möglichst ohne Wirkung auf das Drehmoment bleiben.

Weiterhin ist wünschenswert, die Ausfallwahrscheinlichkeit einer derartigen elektrischen Maschine zu reduzieren und in einem Fehlerfall, z.B. bei einem Kurzschluss in der Wicklung, die auftretenden Bremsmomente vergleichsweise gering zu halten. Diese treten auf, da es im Gegensatz zu elektrisch erregten Maschinen bei permanentmagneterregten Maschinen nicht möglich ist, das magnetische Feld abzuschalten.

Häufig werden bei elektrischen Maschinen mit einer 3/2-Topologie Statorwicklungen vorgesehen, bei denen sich die einzelnen Statorspulen nicht überlappen, also die Statorspulen in Form einer kreuzungsfreien Statorwicklung angeordnet sind. Die 3/2-Topologie sieht vor, dass bei einem Polpaar (zwei Pole) im Rotor drei Statornuten gegenüberstehen, wie z.B. bei einer elektrischen Maschine mit 9 Statorzähnen und 6 Rotorpolen bzw. bei einer elektrischen Maschine mit 12 Statorzähnen und 8 Rotorpolen. Diese Ausbildungen haben jedoch den Nachteil ausgeprägter Drehmomentenschwankungen, die in der Regel nur durch aufwändige Zusatzmaßnahmen reduziert werden können (z.B. Schrägung, Luftspaltaufweitung, Zusatznuten), wodurch die Leistungsdichte der Maschine erheblich verringert wird. Zudem ergibt sich hier eine erhöhte Empfindlichkeit bezüglich Toleranzen aus dem Fertigungsprozess.

Weiterhin ist eine elektrische Maschine mit 18 Statorzähnen und 8 Rotorpolen bekannt, die jedoch den Nachteil aufweist, dass sie eine verteilte Wicklung aufweist, bei der sich im Wickelkopf die Spulenwicklungen verschiedener Phasen kreuzen und in den Statornuten Spulenseiten unterschiedlicher Phasen liegen. Daher können in den Wickelköpfen und in der Nut Kurzschlüsse zwischen verschiedenen Phasen auftreten. Diese können zu einem unzulässig hohen Bremsmoment führen, was bei einem Einsatz in Lenkantrieben zu vermeiden ist. Aus diesem Grund wird bei derartigen elektrischen Maschinen häufig eine Sternpunktauftrennung vorgesehen. Alternativ kann auch die Ausführung in einer Sternpunktschaltung mit mehreren Sternpunkten vorgesehen sein.

Ferner sind elektrische Maschinen mit 12 Statorzähnen und 10 Rotorpolen bekannt, die kleinere Rastmomente im Vergleich zu elektrischen Maschinen mit 12 Statorzähnen und 8 Rotorpolen ermöglichen, jedoch im Vergleich zu einer elektrischen Maschine mit 18 Statorzähnen und 8 Rotorpolen eine geringere Drehmomentqualität erreichen. Zudem besitzt diese Topologie eine ausgeprägte Empfindlichkeit gegenüber Fertigungstoleranzen.

Es ist Aufgabe der vorliegenden Erfindung, eine elektrische Maschine zur Verfügung zu stellen, die geringe Rastmomente, eine geringe Drehmomentwelligkeit und eine erhöhte Fehlersicherheit aufweist.

Offenbarung der Erfindung

Diese Aufgabe wird durch die elektrische Maschine gemäß Anspruch 1 gelöst.

Weitere vorteilhafte Ausgestaltungen sind in den abhängigen Ansprüchen angegeben.

Gemäß einem ersten Aspekt ist eine elektrische Maschine vorgesehen. Die elektrische Maschine umfasst einen Rotor mit 14 Rotorpolen, der drehbar um eine Mittenachse angeordnet ist, und einen Stator mit 18 Statorzähnen, die in einer radialen Richtung bezüglich der Mittenachse von dem Stator in Richtung des Rotors abstehen. Jeder der Statorzähne ist von einer nur einen der Statorzähne umgebenden Statorspule umgeben.

Bei Verwenden einer Topologie einer elektrischen Maschine mit 18 Statorzähnen und 14 Rotorpolen wurde überraschend ein sehr geringes Rastmoment und eine niedrige Drehmomentwelligkeit festgestellt, wenn die Wicklung als kreuzungsfreie Einzelzahnwicklung ausgeführt ist. Das Vorsehen der kreuzungsfreien Einzelzahnwicklung bietet zusätzlich den besonderen Vorteil einer erhöhten Sicherheit gegenüber Kurzschlüssen zwischen Statorspulen, die verschiedenen Phasen zugeordnet sind.

Gemäß einer Ausführungsform kann jede der Statorspulen einer von drei Phasen zugeordnet sein, wobei jeweils drei einer Phase zugeordneten Statorspulen eine Spulengruppe bilden, wobei jede Spulengruppe mit einem Statorspulenpaar aus zwei zueinander benachbarten Statorspulen, die einer gleichen Phase zugeordnet sind, und einer zu dem Statorspulenpaar nicht benachbarten einzelnen Statorspule gebildet ist, wobei zwischen dem Statorspulenpaar und der einzelnen Statorspule drei Statorzähne vorgesehen sind, an denen anderen Phasen zugeordnete Statorspulen angeordnet sind.

Diese Anordnung der Statorspulen einer Phase ermöglicht es, die Drehmomentenschwankungen deutlich zu reduzieren. Für die Drehmomentenschwankungen sind Oberwellen im Luftspalt zwischen einer Außenfläche des Rotors und die darauf gerichtete Fläche der Statorzähne verantwortlich. Die Momentenschwankungen werden durch das Zusammenwirken von Rotor-Oberwellen und Stator-Oberwellen derselben Ordnung, die nicht dem Vielfachen der Phasenzahl entspricht, hervorgerufen. Besonders störend sind Drehmomentenschwankungen mit 6-facher oder 12-facher Polpaarzahl, also im vorliegenden Fall mit einer 42. und 84. mechanischen Ordnung. Diese entstehen aus der Überlagerung der Grundschwingung des Statorstromes mit der 5. /7. bzw. 11./13. Oberschwingung der elektromotorischen Kraft. Die oben vorgeschlagene Topologie der elektrischen Maschine in Verbindung mit der Verschaltung der als Einzelzahnspulen ausgebildeten Statorspulen führt zu geringen Wickelfaktoren (Verhältnis der durch die betrachtete Oberwelle hervorgerufenen elektromotorischen Kraft zur gesamten elektromotorischen Kraft) für die 5. /7. bzw. 11./13. Harmonischen, so dass Drehmomentenschwankungen der 42. und 84. mechanischen Ordnung möglichst gering werden. Gleichzeitig wird gewährleistet, dass der Grundwellenwicklungsfaktor möglichst groß wird, um eine hohe Leistungsdichte zu realisieren.

Weiterhin sind zwei derselben Phase zugeordneten Spulengruppen in dem Stator gegenüberliegend angeordnet und können die Wicklungssinne von zueinander benachbarten der Statorspulen einer oder mehreren Spulengruppen derselben Phase unterschiedlich sein. Jeweils zwei derselben Phase zugeordneten Spulengruppen können in Reihe zu einer Reihenschaltung oder parallel zueinander zu einer Parallelschaltung verschaltet sein, wobei die Reihenschaltungen der phasengleichen Spulengruppen bzw. die Parallelschaltungen der phasengleichen Spulengruppen zu einer Sternpunktschaltung mit einem gemeinsamen Sternpunkt oder zu einer Dreiecksschaltung verschaltet sind.

Weiterhin ist jeweils eine derselben Phase zugeordneten Spulengruppe zu einer Sternpunktschaltung mit einem Sternpunkt bzw. zu einer Dreiecksschaltung verschaltet.

Weiterhin können die Permanentmagneten jeweils in oder auf einem der Rotorpole angeordnet sein und so ausgerichtet sein, dass deren Magnetpole jeweils in radiale Richtung weisen.

Weiterhin können die Permanentmagneten jeweils in einer Tasche zwischen zwei Rotorpolen angeordnet sein und so ausgerichtet sein, dass deren Magnetpole in tangentiale Richtung weisen.

Gemäß einer weiteren Ausführungsform kann eine dem Stator zugewandte Außenfläche der Rotorpole eine stärkere Krümmung aufweisen, als die durch den Abstand der Außenfläche von einer Mittenachse des Rotors bestimmte Kreiskrümmung. Insbesondere kann die Außenfläche der Rotorpole eine Richterkontur oder eine kreisförmige Kontur mit einem Radius, der kleiner ist als der Abstand der Außenfläche von der Mittenachse des Rotors, aufweisen.

Weiterhin können die Statorspulen, die einer gemeinsamen Phase zugeordnet sind, einen in Umfangsrichtung des Stators der Reihe nach gesehen gegenläufigen Wicklungssinn aufweisen.

Gemäß einem weiteren Aspekt ist vorgesehen, die obige elektrische Maschine in einem Lenksystem eines Kraftfahrzeugs zu verwenden.

Kurzbeschreibung der Zeichnungen

Ausführungsformen für die elektrische Maschine sind nachfolgend anhand der beigefügten Zeichnungen näher erläutert. Es zeigen:

| | |
|---|---|
| Figur 1 | eine elektrische Maschine mit 18 Statorzähnen und 14 Rotorpolen mit an der Oberfläche angeordneten Magnetsegmenten; |
| Figur 2 | eine schematische Darstellung der einer bestimmten Phase zugeordneten Statorspulen; |
| Figur 3 | eine Darstellung der Verteilung der Statorspulen von drei Phasen an den Statorzähnen der elektrischen Maschine und wobei die durch jeweils drei Statorspulen gebildeten Spulengruppen parallel zueinander geschaltet sind; |
| Figur 4 | eine Darstellung der Verteilung der Statorspulen von drei Phasen an den Statorzähnen der elektrischen Maschine und wobei die durch jeweils drei Statorspulen gebildeten Spulengruppen in Reihe miteinander verschaltet sind; |
| Figuren 5a - 5f | Schaltbilder, die mögliche Verschaltungen der einzelnen Spulengruppen zu einem Dreiphasensystem darstellen. |

Beschreibung von Ausführungsformen

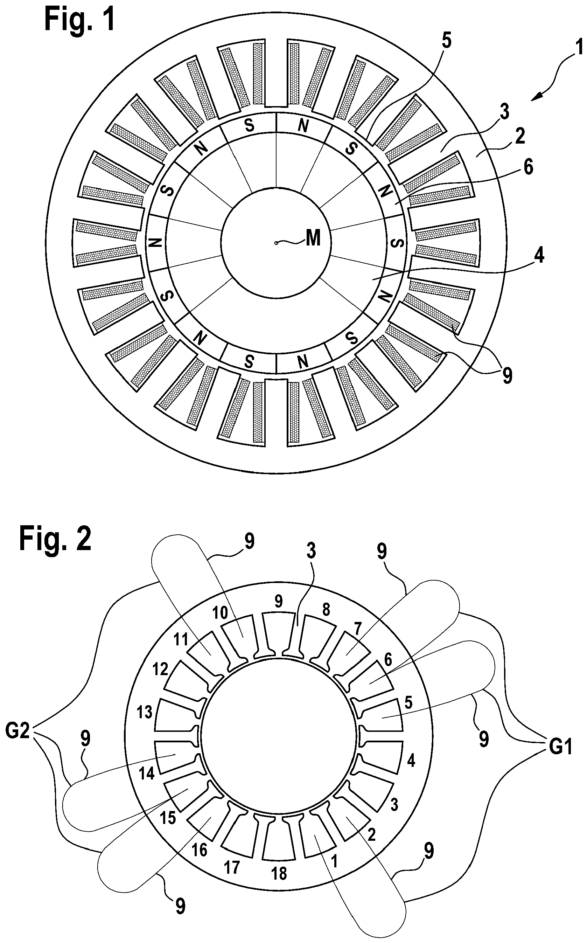

Figur 1 zeigt einen Querschnitt durch eine elektrische Maschine 1. Die elektrische Maschine umfasst einen Stator 2, der einen um eine Mittenachse M drehbaren Rotor 4 umgibt. Die elektrische Maschine 1 ist im gezeigten Ausführungsbeispiel als Synchronmaschine ausgebildet.

Der Stator 2 umfasst 18 Statorzähne 3, die ausgehend von einem Statorkörper des Stators 2 in radialer Richtung hervorstehend nach innen in Richtung des Rotors 4 gerichtet sind. Das heißt, die Statorzähne 3 sind in Richtung der Mittenachse M der elektrischen Maschine 1 ausgerichtet. Die Statorzähne 3 sind in tangentialer Richtung voneinander gleichmäßig beabstandet, d.h. mit gleichem Versatzwinkel, und im Inneren des Statorkörpers angeordnet.

Der Rotor 4 ist drehbar um die Mittenachse M angeordnet und weist die Permanentmagnete 6 auf. Die Permanentmagnete 6 bilden Rotorpole 8 und sind so angeordnet, dass deren Magnetpole in radialer Richtung verlaufen. Benachbarte Permanentmagnete 6 sind entgegengesetzt gepolt. Die Anzahl der Rotorpole 8 des gezeigten Rotors 4 beträgt 14. Die Permanentmagnete 6 können, wie in der Ausführungsform der Figur 1 dargestellt, als Oberflächenmagnete ausgebildet sein, die an der Außenfläche des Rotorkörpes °4 angebracht sind oder auch in Ausnehmungen in der Außenfläche des Rotorkörpers 4 eingebettet sind, so dass der jeweilige Pol des Permanentmagneten 6 in radialer Richtung nach außen hin freiliegt. Alternativ können die Permanentmagnete 6 als vergrabene Permanentmagnete 6 ausgebildet sein, die sich im Inneren eines entsprechenden Rotorpols 8 befinden und durch Material des Rotorpols 8 in radialer Richtung nach außen überdeckt sind. Die Verwendung von im Rotor 4 vergrabenen Permanentmagneten 6 kann vorteilhaft sein, da einfache und kostengünstige Magnetformen, wie z.B. mit ebenen Oberflächen, verwendet werden können und dadurch weiterhin eine einfache Rotorkonstruktion ohne Bandage und Korrosionsschutz ermöglicht werden kann.

Die Statorzähne 3 sind von Statorspulen 9 umgeben, die jeweils einen Statorzahn 3 umschließen. Das Vorsehen einer Statorspule 9 an jedem Statorzahn 3 ermöglicht es, sich überschneidende bzw. überkreuzende Spulenwicklungen der Statorspulen 9 zu vermeiden. Dadurch wird die Gefahr von Kurzschlüssen zwischen den Statorspulen 9 reduziert, da in einer Nut zwischen zwei Statorzähnen 3 lediglich zwei Spulenseiten angeordnet sind.

Das Innenende jedes Statorzahns 3 kann einen Abschluss aufweisen, der als Zahnkopf 5 bezeichnet wird. Der Zahnkopf 5 dient dazu, eine Fläche bereitzustellen, durch die der Hauptanteil bzw. der größtmögliche Anteil des magnetischen Flusses, der von Permanentmagneten 6, die in dem Rotor 4 angeordnet sind, aufgenommen wird. Im vorliegenden Ausführungsbeispiel weist die elektrische Maschine 1 Statorzähne 3 auf, die keinen verbreiterten Zahnkopf 5 aufweisen, so dass es in einfacher Weise möglich ist, die Spulenwicklungen 9 auf die Statorzähne 3 aufzubringen. Mit anderen Worten sind die Statorzähne 3 als zylinderförmige bzw. quaderförmige Vorsprünge des Statorkörpers ausgebildet.

Alternativ oder zusätzlich kann vorgesehen sein, die Rotorpole 8 mit einer Außenkontur zu versehen, um eine möglichst sinusförmige Flussdichteverteilung über den Rotorpolen 8 zu erreichen. In der Regel zeichnen sich Rotorpole mit Außenkontur dadurch aus, dass ihre Außenfläche in einem Mittenbereich des betreffenden Rotorpols 8 (bezüglich der Umfangsrichtung) eine höhere Krümmung aufweist als eine Krümmung, die durch die Kreiskrümmung eines Kreises um die Mittenachse M des Rotors 4 mit einem Radius des Abstandes zwischen der Mittenachse M und des Mittenbereichs des betreffenden Rotorpols vorgegeben ist. Eine Möglichkeit besteht darin, die Rotorpole 8 als so genannte Sinuspole auszubilden. Gemäß Richter ergibt sich als Formel für den Rotoraußenradius:

$$R = \sqrt[p]{\frac{F_0}{\cos(p \cdot \varphi)} + \sqrt{R_1^{2p} + \frac{F_0^2}{\cos^2(p \cdot \varphi)}}}$$

$$F_0 = \frac{(R_1 \pm \delta_0)^{2p} - R_1^{2p}}{2 \cdot (R_1 \pm \delta_0)^p}$$

wobei R dem Radius unter dem räumlichen Winkel $\varphi$ (Polformkontur), p der Polpaarzahl, $\varphi$ dem räumlichen Winkel bezogen auf die Polmitte, $R_1$ dem Ständerradius (Innendurchmesser bei Innenläufer und umgekehrt) sowie $\delta_0$ dem minimalen Luftspalt in Polmitte entsprechen. Es ergibt sich eine wellenförmige Außenfläche des Rotors 4, wobei im Allgemeinen die Bereiche der höchsten Erhebungen jedes Rotorpols 8 den Mittenachsen der Rotorpole 8, die in radialer Richtung verlaufen, entsprechen. Die Kontur für den Luftspalt erzeugt ein durch das Polrad annäherndes sinusförmiges Luftspaltfeld, das eine deutliche Reduzierung der Rastmomente im Leerlauf und der Oberwellenmomente unter Last ermöglicht.

Alternativ kann die Polformkontur auch durch eine Außenkontur angenähert werden, die einer Bogenkontur mit einem konstanten Konturradius entspricht. Dabei ist der Konturradius kleiner als der Radius der Außenfläche des Rotors 4, so dass der größte Abstand zwischen der Außenfläche des Rotors 4 und der Mittenachse M in den Mittenbereichen der Rotorpole 8 vorliegt.

Alternativ können an Stelle der Permanentmagneten 6, deren Magnetpole in radialer Richtung ausgerichtet sind, die Permanentmagnete als Speichenmagnete ausgebildet sind. Die Speichenmagnete sind bei einer solchen elektrischen Maschine 1 in Taschen zwischen zwei benachbarten Rotorpolen 8 des Rotors 4 angeordnet, wobei in zwei jeweils benachbarten Taschen an zwei Seiten des Rotorpols 8 die Permanentmagnete 6 so ausgerichtet sind, dass deren Magnetpole im Wesentlichen in tangentialer Richtung gegeneinander gerichtet ist. Die Taschen können nach außen hin offen oder geschlossen ausgeführt sein

Auch bei einer solchen Speichenmagnetanordnung können die Rotorpole 8 eine der oben beschriebenen Polformkonturen aufweisen.

Eine elektrische Maschine mit aufgestellten Magneten, d.h. mit Speichenmagneten, hat den Vorteil, dass besonders bei höheren Polzahlen der Fluss der Magnete zum Pol hin konzentriert werden kann und gegenüber flach vergrabenen oder an der Oberfläche angeordneten Magneten ein größerer Polfluss über den Luftspalt erzeugt werden kann. Somit ist es möglich, bei gleicher Baugröße ein größeres Drehmoment zu erzeugen.

Wie oben beschrieben, werden die Statorspulen 9 als Einzelzahnwicklungen ausgeführt, so dass Kurzschlüsse zwischen den Leitern unterschiedlicher Phasen konstruktiv ausgeschlossen werden können. Dies gilt insbesondere, wenn zwischen den Spulenseiten benachbarter Statorspulen 9, die in einer gemeinsamen Nut zwischen zwei Statorzähnen 3 liegen, ein ausreichender Isolationsabstand gewährleistet ist oder ein (nicht gezeigtes) Isolationselement zwischen Spulenseiten der Statorspulen 9, die den Abschnitten der Statorspulen 9 entsprechen, die in den Nuten liegen, vorgesehen wird. Das Isolationselement kann durch Kleben oder Klemmen zwischen den Spulenseiten befestigt sein.

Die betrachtete elektrische Maschine 1 entspricht einem dreiphasigen permanentmagneterregten Synchronmotor. Die einzelnen Statorspulen 3 sind also verschiedenen Phasen zugeordnet, wobei in Fig. 2 die zu einer gemeinsamen Phase (Phase U) gehörenden Statorspulen 9 schematisch dargestellt sind. Man erkennt, dass jeweils sechs Statorspulen 9 einer Phase zugeordnet. Die sechs Statorspulen 9 bilden zwei Spulengruppen G1, G2 mit jeweils drei Statorspulen 9.

Jede Spulengruppe G1, G2 weist ein Statorspulenpaar P1, P2 aus zwei zueinander benachbarten Statorspulen 3 auf, die einer gleichen Phase zugeordnet sind, und eine zu dem Statorspulenpaar nicht benachbarte einzelne Statorspule 9 E1, E2 auf. Zwischen dem Statorspulenpaar P1, P2 und der einzelnen Statorspule 9 E1, E2 sind drei Statorzähne 3 vorgesehen sind, an denen anderen Phasen zugeordnete Statorspulen 9 angeordnet sind.

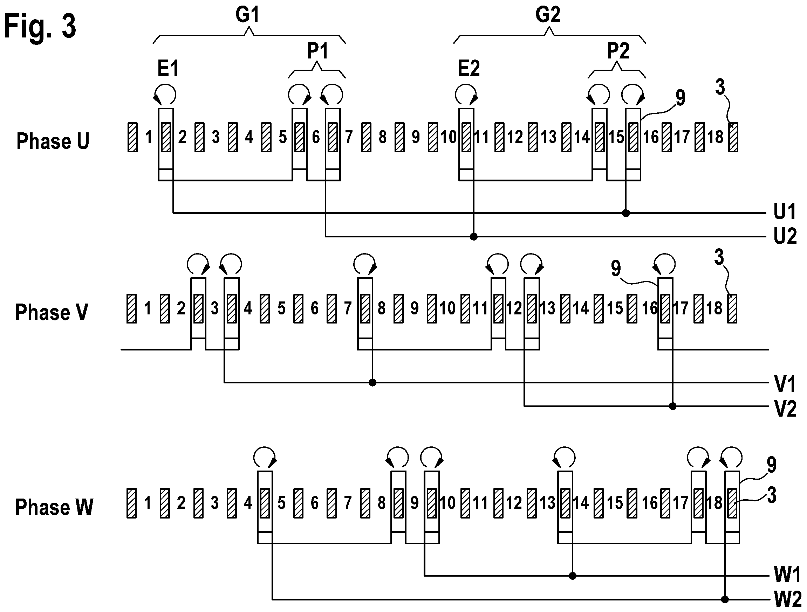

Die Statorspulenpaare P1, P2 einer Phase sind so angeordnet, dass sie im Stator 2 einander gegenüberliegen. Das gilt für die einzelnen Statorspulen 9 E1, E2 entsprechend. Die Spulengruppen G1, G2 jeder Phase sind zueinander versetzt angeordnet, wobei alle Statorspulenpaare P1, P2 jeder Phase U, V, W zueinander versetzt angeordnet sind, so dass ein zwischen zwei Statorspulenpaare liegender Statorzahn 3 mit einer einzelnen Statorspule 9 einer Phase versehen ist, die nicht einer Phasen der benachbarter Statorspulenpaare entspricht. Das heißt für das vorliegende Ausführungsbeispiel, dass die Statorspulen 9 an den Statorzähnen 3 mit den Nummern 2, 6, 7, 11, 15, und 16 der Phase U, die Statorspulen 9 an den Statorzähnen 3 mit den Nummern 3, 4, 8, 12, 13 und 17 der Phase V sowie die Statorspulen 9 an den Statorzähnen 3 mit den Nummern 5, 9, 10, 14, 18 und 1 der Phase W zugeordnet sind, wie in Fig. 3 in einer schematischen Draufsicht auf die Statorzähne 3 in radialer Richtung dargestellt ist.

Die Statorspulen 9, die einer gemeinsamen Phase zugeordnet sind, weisen einen der Reihe nach gesehen gegenläufigen Wicklungssinn auf. Dies ist durch einen Kreispfeil über den Statorspulen der Phase U in Fig. 3 dargestellt. Dadurch haben zwei im Stator einander gegenüberliegende Statorspulen 9, die einer gemeinsamen Phase zugeordnet sind, einen gegenläufigen Wicklungssinn. Weiterhin folgt daraus, dass einander benachbarte Statorspulen 9 ebenfalls einen gegenläufigen Wicklungssinn aufweisen.

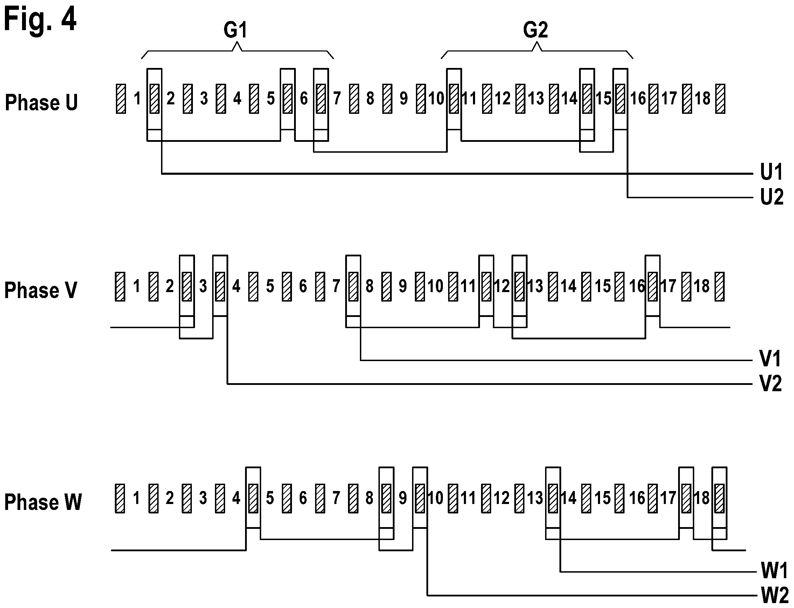

In Fig. 3 sind die Spulengruppen G1, G2 der Phasen U, V, W parallel miteinander verschaltet, um so eine Spulenanordnung für die betreffende Phase zu bilden. Analog dazu sind in Fig. 4 die Spulengruppen G1, G2 der Phasen U, V, W in Reihe miteinander verschaltet, um so eine Spulenanordnung für die betreffende Phase zu bilden.

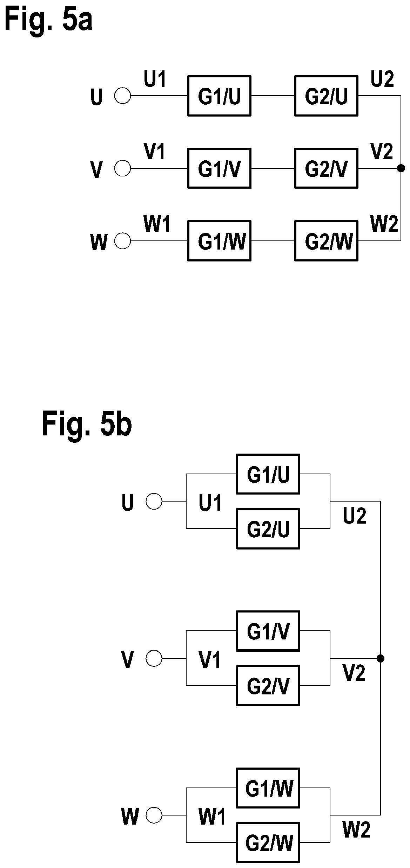

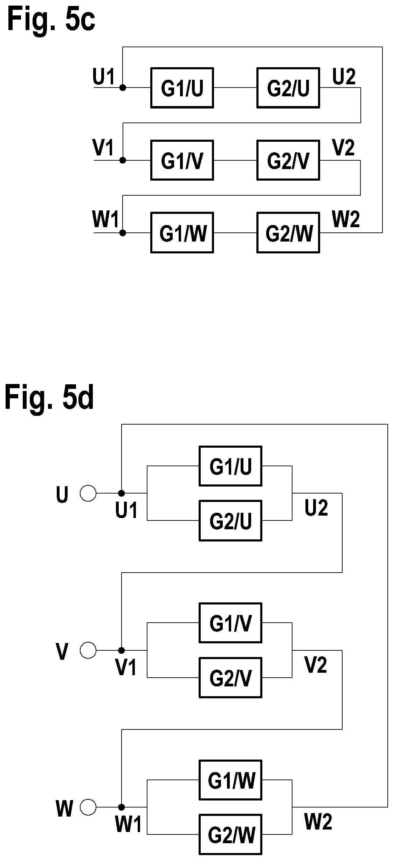

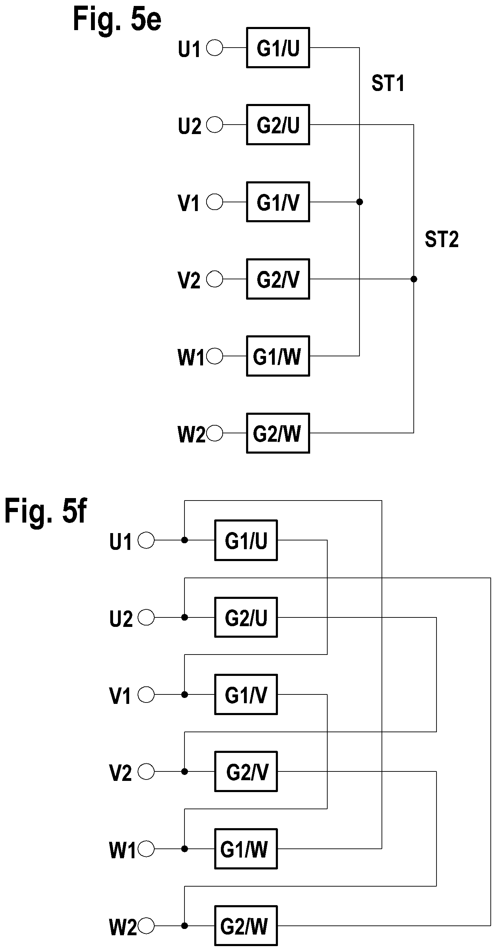

In den Figuren 5 a - 5e sind verschiedene Verschaltungen der elektrischen Maschine schematisch dargestellt, wobei die Spulengruppen als Blöcke mit der Bezeichnung der Spulengruppe und der Bezeichnung der Phase, wie z.B. G2/W dargestellt sind.

In Figur 5a ist eine Verschaltung der in Reihe geschalteten Spulengruppen G1, G2 (siehe Figur 4) in Sternpunktschaltung mit einem einzigen Sternpunkt ST gezeigt. In Figur 5b ist eine Verschaltung der parallel geschalteten Spulengruppen G1, G2 (siehe Figur 3) in Sternpunktschaltung mit einem einzigen Sternpunkt ST gezeigt. Analog dazu sind in den Figuren 5c und 5d Verschaltungen der in Reihe geschalteten Spulengruppen G1, G2 in Dreieckschaltung bzw. der parallel geschalteten Spulengruppen G1, G2 in Dreiecksschaltung gezeigt.

In Figur 5e ist eine Verschaltung gezeigt, bei der die Spulengruppen G1, G2 getrennt zu zwei Sternpunktschaltungen mit jeweils einem Sternpunkt ST1, ST2 miteinander verschaltet sind. Mit anderen Worten sind jeweils eine erste der Spulengruppen G1 jeder Phase in einer Sternpunktschaltung über einen ersten Sternpunkt ST1 und eine zweite der Spulengruppen G2 jeder Phase in einer zweiten Sternpunktschaltung über einen zweiten Sternpunkt ST1 verschaltet.

In Figur 5f ist eine analoge Verschaltung gezeigt, bei der die Spulengruppen G1, G2 getrennt zu zwei Dreiecksschaltungen miteinander verschaltet sind. Mit anderen Worten sind jeweils eine erste der Spulengruppen G1 jeder Phase in einer ersten Dreiecksschaltung und eine zweite der Spulengruppen G2 jeder Phase in einer zweiten Dreiecksschaltung verschaltet.

Vorstehend wurde die Erfindung anhand von elektrischen Maschinen mit Innenrotor beschrieben. Das Prinzip lässt sich jedoch auch auf elektrische Maschinen mit einem Außenrotor anwenden.

**Patentansprüche**

1. Elektrische Maschine (1) umfassend:
 einen Rotor (4) mit 14 Rotorpolen (8), der drehbar um eine Mittenachse angeordnet ist,

 - einen Stator (2) mit 18 Statorzähnen (3), die in einer radialen Richtung bezüglich der Mittenachse von dem Stator (2) in Richtung des Rotors (4) abstehen, und
 jeder der Statorzähne (3) von einer nur einen der Statorzähne umgebenden Statorspule (9) umgeben ist, wobei
 - zwei derselben Phase zugeordneten Spulengruppen (G1, G2) in dem Stator gegenüberliegend angeordnet sind
 **dadurch gekennzeichnet, dass** jeweils eine derselben Phase zugeordneten Spulengruppe (G1, G2) zu einer Sternpunktschaltung mit einem Sternpunkt (ST) bzw. zu einer Dreiecksschaltung verschaltet sind.

2. Elektrische Maschine nach Anspruch 1, wobei jede der Statorspulen (9) einer von drei Phasen zugeordnet ist, wobei jeweils drei einer Phase zugeordneten Statorspulen (9) eine Spulengruppe (G1, G2) bilden, wobei jede Spulengruppe (G1, G2) mit einem Statorspulenpaar (P1, P2) aus zwei zueinander benachbarten Statorspulen (9), die einer gleichen Phase zugeordnet sind, und einer zu dem Statorspulenpaar (P1, P2) nicht benachbarten einzelnen Statorspule (9) gebildet ist, wobei zwischen dem Statorspulenpaar (P1, P2) und der einzelnen Statorspule (9) drei Statorzähne (3) vorgesehen sind, an denen anderen Phasen zugeordnete Statorspulen (9) angeordnet sind.

3. Elektrische Maschine nach Anspruch 1 oder 2, **dadurch gekennzeichnet, dass**, die Wicklungssinne von zueinander benachbarten Statorspulen (9) einer oder mehreren Spulengruppen derselben Phase unterschiedlich sind.

4. Elektrische Maschine nach Anspruch 3, wobei jeweils zwei derselben Phase zugeordneten Spulengruppen in Reihe zu einer Reihenschaltung oder parallel zueinander zu einer Parallelschaltung verschaltet sind, wobei die Reihenschaltungen der phasengleichen Spulengruppen bzw. die Parallelschaltungen der phasengleichen Spulengruppen zu einer Sternpunktschaltung mit einem gemeinsamen Sternpunkt oder zu einer Dreiecksschaltung verschaltet sind.

5. Elektrische Maschine nach Anspruch 1, **dadurch gekennzeichnet, dass** der Rotor (4) als Innenrotor ausgebildet ist.

6. Elektrische Maschine nach einem der Ansprüche 1 bis 5, **dadurch gekennzeichnet, dass** die Permanentmagneten (6) jeweils in oder auf einem der Rotorpole (8) angeordnet sind und so ausgerichtet sind, dass deren Magnetpole jeweils in radiale Richtung weisen.

7. Elektrische Maschine nach einem der Ansprüche 1 bis 5, **dadurch gekennzeichnet, dass** die Permanentmagneten (6) jeweils in einer Tasche zwischen zwei Rotorpolen (8) angeordnet sind und so ausgerichtet sind, dass deren Magnetpole in tangentiale Richtung weisen.

8. Elektrische Maschine nach einem der Ansprüche 1 bis 7, wobei eine dem Stator (2) zugewandte Außenfläche der Rotorpole (8) eine stärkere Krümmung aufweist, als die durch den Abstand der Außenfläche von einer Mittenachse des Rotors (4) bestimmte Kreiskrümmung.

9. Elektrische Maschine nach Anspruch 8, wobei die Außenfläche der Rotorpole (8) eine Richterkontur oder eine kreisförmige Kontur mit einem Radius, der kleiner ist als der Abstand der Außenfläche von der Mittenachse des Rotors (4), aufweist.

10. Elektrische Maschine nach einem der Ansprüche 1 bis 9, wobei die Statorspulen (9), die einer gemeinsamen Phase zugeordnet sind, einen in Umfangsrichtung des Stators (2) der Reihe nach gesehen gegenläufigen Wicklungssinn aufweisen.

11. Verwendung einer elektrischen Maschine nach einem der Ansprüche 1 bis 10 in einem Lenksystem eines Kraftfahrzeugs.

**Claims**

1. Electric machine (1) comprising:

 - a rotor (4) having 14 rotor poles (8), which rotor is arranged such that it can rotate about a central axis,
 - a stator (2) having 18 stator teeth (3), which project in a radial direction with respect to the central axis from the stator (2) in the direction of the rotor (4), and

 each of the stator teeth (3) is surrounded by a stator coil (9) surrounding just one of the stator teeth, wherein

 - two coil groups (G1, G2) associated with the same phase are arranged opposite one another in the stator, **characterized in that** a respective coil group (G1, G2) associated with the same phase is interconnected to form a star point circuit with a star point (ST) or to form a delta circuit.

2. Electric machine according to Claim 1, wherein each of the stator coils (9) is associated with one of three phases, wherein three respective stator coils (9) associated with a phase form a coil group (G1, G2), wherein each coil group (G1, G2) is formed with a stator coil pair (P1, P2) composed of two adjacent stator coils (9) associated with the same phase and one single stator coil (9) not adjacent to the stator coil pair (P1, P2), wherein three stator teeth (3) are provided between the stator coil pair (P1, P2) and the single stator coil (9), on which stator teeth stator coils (9) associated with other phases are arranged.

3. Electric machine according to Claim 1 or 2, **characterized in that** the winding senses of adjacent stator coils (9) of one or more coil groups of the same phase are different.

4. Electric machine according to Claim 3, wherein two respective coil groups associated with the same phase are interconnected in series to form a series circuit or in parallel with one another to form a parallel circuit, wherein the series circuits of the identical-phase coil groups or the parallel circuits of the identical-phase coil groups are interconnected to form a star point circuit with a common star point or to form a delta circuit.

5. Electric machine according to Claim 1, **characterized in that** the rotor (4) is designed as an inner rotor.

6. Electric machine according to one of Claims 1 to 5, **characterized in that** the permanent magnets (6) are each arranged in or on one of the rotor poles (8) and are aligned so that the magnetic poles thereof each point in the radial direction.

7. Electric machine according to one of Claims 1 to 5, **characterized in that** the permanent magnets (6) are each arranged in a pocket between two rotor poles (8) and are aligned so that the magnetic poles thereof point in the tangential direction.

8. Electric machine according to one of Claims 1 to 7, wherein an outer surface of the rotor poles (8) facing towards the stator (2) has a greater curvature than the circular curvature determined by the distance between the outer surface and a central axis of the rotor (4).

9. Electric machine according to Claim 8, wherein the outer surface of the rotor poles (8) has a Richter contour or a circular contour with a radius smaller than the distance between the outer surface and the central axis of the rotor (4).

10. Electric machine according to one of Claims 1 to 9, wherein the stator coils (9) associated with a common phase have opposite winding sense as seen in series in the circumferential direction of the stator (2).

11. Use of an electric machine according to one of Claims 1 to 10 in a steering system of a motor vehicle.

## Revendications

1. Machine électrique (1) comprenant :

   - un rotor (4) comportant 14 pôles de rotor (8) disposés de manière rotative sur un axe central,
   - un stator (2) comportant 18 dents de stator (3) faisant saillie du stator (2) en direction du rotor (4) dans une direction radiale par rapport à l'axe central, et

   chacune des dents de stator (3) étant entourée par une bobine de stator (9) entourant seulement une des dents de stator,

   - deux groupes de bobines (G1, G2) associés à la même phase étant disposés en vis à vis dans le stator, **caractérisée en ce qu'**un groupe de bobines (G1, G2) associé à la même phase est monté de manière à former un circuit en étoile avec un point neutre (ST) ou un circuit en triangle.

2. Machine électrique selon la revendication 1, chacune des bobines de stator (9) étant associée à l'une des trois phases, trois bobines de stator (9) associées à une phase formant un groupe de bobines (G1, G2), chaque groupe de bobines (G1, G2) associé étant formé avec une paire de bobines de stator (P1, P2) comprenant deux bobines de stator (9) adjacentes affectées à une même phase et avec une bobine de stator individuelle (9) non adjacente à la paire de bobines de stator (P1, P2), trois dents de stator (3), sur lesquelles sont disposées des bobines de stator (9) associées à d'autres phases, étant prévues entre la paire de bobines de stator (P1, P2) et la bobine de stator individuelle (9).

3. Machine électrique selon la revendication 1 ou 2, **caractérisée en ce que** les sens d'enroulement de bobines de stator (9) adjacentes d'un ou de plusieurs groupes de bobines de la même phase sont différents.

4. Machine électrique selon la revendication 3, deux mêmes groupes de bobines associés à la même phase étant montés en série de manière à former un circuit série ou en parallèle de manière à former un circuit parallèle, les circuits série des groupes de bobines de même phase ou les circuits parallèle de groupes de bobines de même phase sont montés de manière à former un circuit en étoile à point neutre commun ou un circuit en triangle.

5. Machine électrique selon la revendication 1, **caractérisée en ce que** le rotor (4) est conçu comme un rotor intérieur.

6. Machine électrique selon l'une des revendications 1 à 5, **caractérisée en ce que** les aimants permanents (6) sont disposés chacun dans ou sur l'un des pôles de rotor (8) et sont orientés de sorte que leurs pôles magnétiques soient dirigés chacun dans une direction radiale.

7. Machine électrique selon l'une des revendications 1 à 5, **caractérisée en ce que** les aimants permanents (6) sont disposés chacun dans une poche située entre deux pôles de rotor (8) et sont orientés de sorte que leurs pôles magnétiques soient dirigés dans une direction tangentielle.

8. Machine électrique selon l'une des revendications 1 à 7, une surface extérieure, faisant face au stator (2), des pôles de rotor (8) présente une courbure supérieure à la courbure circulaire déterminée par la distance de la surface extérieure à un axe central du rotor (4).

9. Machine électrique selon la revendication 8, la surface extérieure des pôles de rotor (8) présente un contour de référence ou un contour circulaire de rayon inférieur à la distance de la surface extérieure à l'axe central du rotor (4).

10. Machine électrique selon l'une des revendications 1 à 9, les bobines de stator (9), associées à une phase commune, ayant un sens d'enroulement opposé dans le sens périphérique du stator (2), vu en série.

11. Utilisation d'une machine électrique selon l'une des revendications 1 à 10 dans un système de direction d'un véhicule automobile.

# Fig. 1

# Fig. 2

Fig. 3

# Fig. 4

Phase U

G1        G2

1 2 3 4 5 6 7 8 9 10 11 12 13 14 15 16 17 18

U1
U2

Phase V

1 2 3 4 5 6 7 8 9 10 11 12 13 14 15 16 17 18

V1
V2

Phase W

1 2 3 4 5 6 7 8 9 10 11 12 13 14 15 16 17 18

W1
W2

EP 2 427 951 B1

## Fig. 5a

## Fig. 5b

## Fig. 5c

## Fig. 5d

**Fig. 5e**

**Fig. 5f**